# EUROPÄISCHE PATENTSCHRIFT

(11) **EP 2 914 868 B1**
(45) Veröffentlichungstag und Bekanntmachung des Hinweises auf die Patenterteilung: **18.04.2018**
(21) Anmeldenummer: 13794805.5
(22) Anmeldetag: 30.10.2013
(51) Int. Cl.: F16D 65/12

(54) **WELLENBREMSSCHEIBE MIT EINEM ANSCHLUSSELEMENT**
AXLE-MOUNTED BRAKE DISC WITH A CONNECTING ELEMENT
DISQUE DE FREIN D'ESSIEU POURVU D'UN ÉLÉMENT DE RACCORDEMENT

(30) Priorität: 31.10.2012 DE 102012110454
(43) Veröffentlichungstag der Anmeldung: 09.09.2015
(73) Patentinhaber: KNORR-BREMSE Systeme für Schienenfahrzeuge GmbH, 80809 München (DE)
(72) Erfinder: WALTHER, Florian, 81679 München (DE); MOSBACH, Christian, 82239 Alling (DE)
(86) Internationale Anmeldenummer: PCT/EP2013/003262
(87) Internationale Veröffentlichungsnummer: WO 2014/067655

(56) Entgegenhaltungen:
- DE-A1- 2 806 028
- DE-A1- 19 738 881
- DE-A1-102005 060 440
- US-A- 4 501 346

## Beschreibung

Die Erfindung betrifft eine Verbindung einer Wellenbremsscheibe eines Schienenfahrzeugs mit einem fahrzeugseitigen Anschlusselement gemäß dem Oberbegriff des Anspruchs 1.

In der DE 38 14 614 A1 ist eine Verbindung gemäß der Gattung geoffenbart, bei der zur Befestigung des Reibrings an einer Nabe oder Welle eines Schienenfahrzeuges Anschlussflansche am Innenumfang des Reibrings angeordnet sind, die sich radial nach innen erstrecken und durch Schrauben mit der Nabe verbunden sind, wobei die Schrauben durch die Anschlussflansche geführt sind.

Bei einer in der DE 103 24 816 A1 thematisierten Verbindung sind zwei sich gegenüberliegende Spannringe vorgesehen, zwischen denen ein Bündchen der Nabe eingeklemmt ist und die formschlüssig in den Reibring eingreifen. Die Verbindung der beiden Spannringe erfolgt über Schrauben, die durch das Bündchen der Nabe geführt sind.

Im Betrieb kommt es jedoch häufig zu einer Lockerung der Verschraubung mit der hohen Gefahr eines Versagens der Schraubverbindung. Eine Ursache hierfür kann ein Verschleiß an den Schnittstellen der Verschraubung sein und ein dadurch resultierendes Setzen der Schraubverbindung. Auch ein Einfluss durch eine externe Kraftanregung, wie sie durch Überlagerung der Eigenfrequenzen der Bremsscheibe und der Schiene oder eines Drehgestells entstehen können, ist als Ursache denkbar.

Naturgemäß ist dies insbesondere aus sicherheitsrelevanten Gründen nicht akzeptabel.

Eine gattungsgemäße Verbindung ist aus der DE 28 06 028 A1 bekannt, bei der die Laschen bügelförmig ausgebildet sind und bei Einzelanordnung tangential ausgerichtet einerseits am Flansch und andererseits an einer Nabe befestigt sind. Zur Übertragung von Umfangskräften ist eine einseitig angeschraubte federnde Platte zwischen den Laschen angeordnet, die eine Trennfuge im Übergang zwischen dem Flansch und der Nabe bereichsweise überdeckt.

In einer anderen Ausführungsvariante sind Federplatten vorgesehen, die jeweils zwei abständig zueinander angeordnete Laschen aufweisen, zwischen die eine weitere Federplatte eingepresst ist, die mit dem Flansch verbunden ist, während die andere Federplatte mit an der Nabe angeschlossen ist.

Die DE 71 34 524 U zeigt und beschreibt eine Verbindung, bei der ein Blechring mit der Nabe verbunden ist und an den sich gebogene Fortsätze anschließen, die mit dem Flansch verbunden sind.

Schließlich offenbart die US 4 501 346 A eine Verbindung des Flansches mit der Nabe mittels einzelner federnder Laschen, die Z-förmig gebogen sind und deren einer Schenkel an der Nabe und der andere am Flansch angeschlossen ist.

Der Erfindung liegt die Aufgabe zugrunde, eine Verbindung der gattungsgemäßen Art so weiterzuentwickeln, dass ihre Betriebssicherheit verbessert und ihre Standzeit erhöht wird.

Diese Aufgabe wird durch eine Verbindung mit den Merkmalen des Anspruchs 1 gelöst.

Wie sich überraschend gezeigt hat, wird eine Relativbewegung zwischen der Wellenbremsscheibe und dem Anschlusselement wirksam verhindert, während eine betriebsbedingte thermische Ausdehnung des Reibrings im elastischen Bereich, analog zu einer Monoblockbremsscheibe, durch die Laschen kompensiert wird.

Dabei sind die Laschen, deren Anzahl bevorzugt einer Primzahl entspricht, so ausgebildet, dass das Bremsmoment im auftretenden Umfang problemlos übertragen wird, wobei die Laschen so orientiert sind, dass mit der Fläche ihres maximalen Flächenträgheitsmomentes die Umfangskraft vom Reibring auf die Nabe übertragen wird. Die Laschen sind S-förmig gekröpft, mit zwei gegensinnig abgewinkelten Schenkeln, von denen der eine am Flansch und der andere am Anschlusselement anliegt und jeweils mit einer Schraube befestigt sind. Hier ist in den jeweiligen Schenkel eine Durchgangsbohrung eingebracht, durch die die Schraube geführt ist.

Nach einem weiteren Gedanken der Erfindung ist vorgesehen, an beiden Stirnseiten des Flansches Laschen zu befestigen, ebenso wie an den zugeordneten Bereichen des Anschlusselementes.

Prinzipiell wirken die Laschen in radialer Richtung aufgrund der materialbedingten Elastizität als Federelemente, um die radiale thermische Ausdehnung des Reibringes problemlos ausgleichen zu können.

Dies ist auch dann der Fall, wenn zwei Laschen so weit zu einer Einheit zusammengefasst sind, dass zwei benachbarte Schenkel einstückig ausgebildet sind, während die anderen beiden benachbarten Schenkel stofflich voneinander getrennt sind.

Zweckmäßigerweise sind die dem Anschlusselement zugeordneten Schenkel einstückig und die dem Flansch zugeordneten sozusagen zweistückig. Denkbar ist aber auch eine umgekehrte Ausbildung, d.h., die einstückigen Schenkel sind am Flansch und die zweistückigen am Anschlusselement gehalten.
In diesem Sinne kann auch eine Verbindung ausgeführt sein, bei der die einander benachbarten Schenkel der Laschen einer Seite insgesamt einstückig sind, insofern also einen Ring bilden, während die jeweils zugeordneten, dazu radial ausgerichteten benachbarten Schenkel stofflich getrennt sind.

Bei Einsatz eines Spannrings, in den der Flansch zur axialen Sicherung formschlüssig eingreift, werden durch die dem Spannring zugeordneten Schenkel der Laschen, ebenso wie durch den Spannring selbst Befestigungsschrauben geführt, die in stirnseitig vorgesehene Gewinde einer Nabe eingedreht oder durch Durchgangslöcher geführt und verschraubt sind. Hierdurch ergibt sich eine besonders große Klemmlänge

Die beidseitig am Flansch anliegenden Schenkel der Laschen hingegen sind durch eine Kopfschraube gehalten, die einerseits mit ihrem Kopf an dem zugeordneten Schenkel der Laschen anliegt, ebenso wie andererseits eine auf die durchgeführte Schraube aufgedrehte Mutter, die bevorzugt verdrehgesichert gehalten ist.

Um mögliche Relativbewegungen des Reibringes zur Nabe in axialer Richtung zu begrenzen, kann eine Verbindung zwischen beiden über einen bajonettartigen Verschluss vorgesehen sein.

Im Übrigen ist festzuhalten, dass die neue Verbindung äußerst preiswert herstellbar ist, da die Laschen als einfache Stanz-, Biege- oder Tiefziehteile zu fertigen sind und zwar in jeder Ausführungsvariante, also sowohl als einzelnes oder mehrfaches Teil oder als Ring.

Da es sich bei Wellenbremsscheiben um Serienteile handelt, die in großen Stückzahlen hergestellt werden, kommt einer einfachen Herstellung, wie sie die Erfindung ermöglicht, eine besondere Bedeutung zu.

Unter diesem Aspekt ist auch die Möglichkeit zu sehen, dass die Laschen bei einem betriebsbedingten Wechsel der Wellenbremsscheibe wiederverwendet werden können.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: ein Ausführungsbeispiel als Teilausschnitt der Verbindung bzw. als Einzelheit der Verbindung
- Figur 2: ein Ausführungsbeispiel der Erfindung als Teilausschnitt der Verbindung bzw. als Einzelheit der Verbindung
- Figur 3: ein weiteres Ausführungsbeispiel der Verbindung in einer Draufsicht.

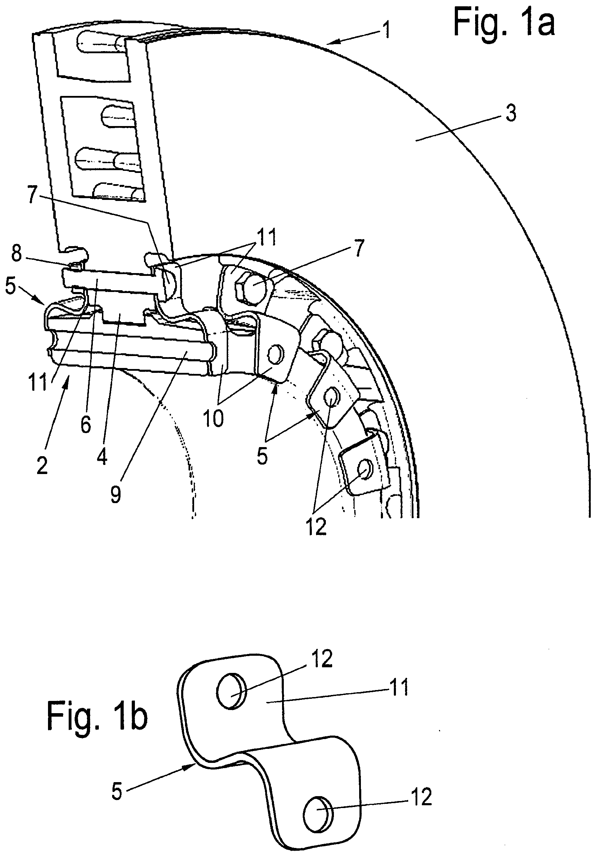

In den Figuren 1a) und 2a) ist jeweils die Verbindung einer Wellenbremsscheibe 1 eines Schienenfahrzeuges mit einem fahrzeugseitigen Anschlusselement in Form einer Nabe 2 dargestellt, die mit einer nicht gezeigten Achse eines Schienenfahrzeuges verbindbar ist.

Die Wellenbremsscheibe 1 besteht aus einem Reibring 3 sowie einem am Innenumfang angeformten Flansch 4, der zur axialen Sicherung der Wellenbremsscheibe 1 in einer umfänglichen Nut 13 der Nabe 2 einliegt.

Zur Verbindung der Wellenbremsscheibe 1 mit der Nabe 2 sind beidseitig aus Blech bestehende Laschen 5 vorgesehen, die, wie die Figuren 1b) und 2b) besonders deutlich wiedergeben, S-förmig gebogen sind, mit zwei gegensinnig abgewinkelten, parallel zueinander ausgerichteten Schenkeln 10, 11, wobei der jeweilige Schenkel 11 am Flansch 4 und der Schenkel 10 an der Stirnseite der Nabe 2 anliegt.

Die Verbindung der Laschen 5 mit dem Flansch 4 erfolgt über Durchgangsschrauben 6, mit einem an dem Schenkel 11 anliegenden Kopf 7 sowie einer am anderen Ende aufgeschraubten Mutter 8, die am Schenkel 11 der dortigen Lasche 5 anliegt.

In vergleichbarer Weise sind die Laschen 5 an der Nabe 2 befestigt, wobei hierzu in der Nabe 2 axial ausgerichtete Durchgangsbohrungen vorgesehen sind, durch die nicht dargestellte Schrauben führbar sind, die andererseits beispielsweise in die Stirnseite der Nabe 2 eindrehbar sind.

Bei dem in der Figur 1 gezeigten Beispiel sind die Laschen 5 einzeln ausgebildet, d.h., jede Lasche 5 weist einen an der Nabe 2 anliegenden Schenkel 10 sowie einen am Flansch 4 anliegenden Schenkel 11 auf. Dabei sind in die Schenkel 10, 11 Bohrungen 12 eingebracht, durch die Schrauben 6 sowie nicht dargestellte, durch die Nabe 2 geführte Schrauben gesteckt bzw. steckbar oder beidseitig einschraubbar sind.

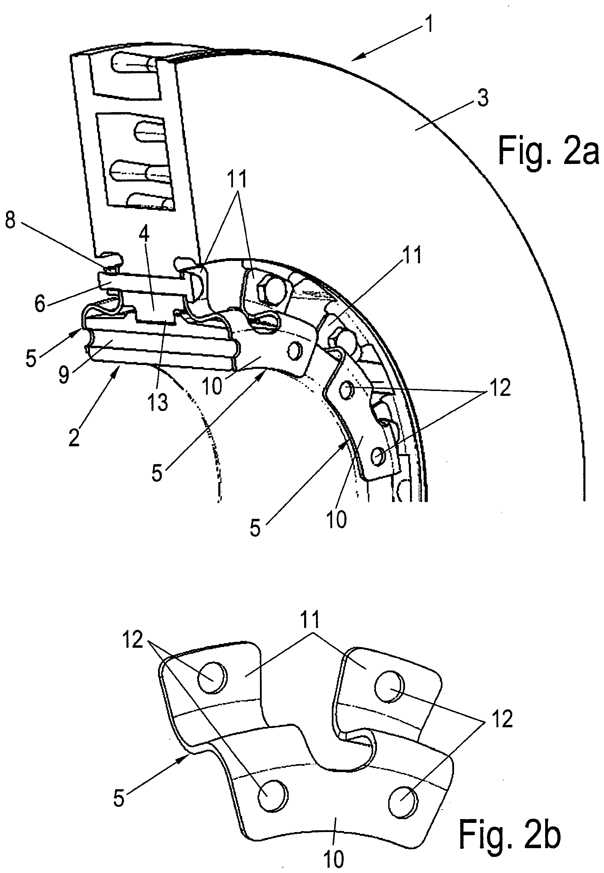

Bei der in der Figur 2 gezeigten Ausführungsvariante der erfindungsgemäßen Verbindung ist die Lasche 5 so gestaltet, dass die an der Nabe 2 anliegenden Schenkel 10 einstückig sind, während die dazu abgewinkelten Schenkel 11, die am Flansch 4 anliegen, getrennt voneinander gestaltet sind, mit einem gewissen Abstand zueinander. Somit kommen quasi immer paarige Laschen 5 zur Verwendung, wobei die Figur 2b) ein solches Paar von Laschen 5 als Einzelheit zeigt.

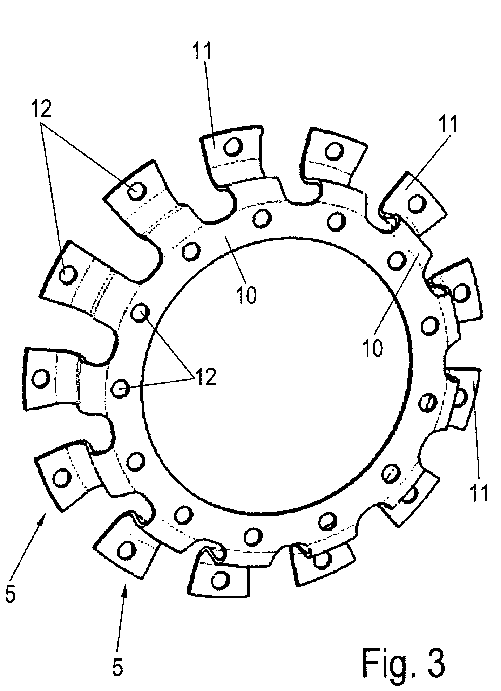

In der Figur 3 schließlich sind die Schenkel 10 aller Laschen 5 zu einem einstückigen inneren Ring geformt, an den sich die Schenkel 11, auch hier getrennt von den benachbarten, radial nach außen gerichtet anschließen. Jeder der Schenkel 10, 11 weist eine Bohrung 12 auf, wobei immer zwei radial sich gegenüberliegende miteinander fluchten.

Die Anzahl der dem Flansch 4 zugeordneten Bohrungen 12 und damit der durchgeführten Schrauben kann gegenüber der Anzahl der der Nabe 2 zugeordneten Bohrungen 12 verschieden sein.

Wie sehr deutlich erkennbar ist, sind die Laschen 5, unabhängig davon ob sie als Einzelteil (Fig. 1b), als Paar (Fig. 2b) oder als Ring (Fig. 3) vorliegen, als einfaches Stanz-Biegeteil aus Blech herstellbar.

## Patentansprüche

1. Wellenbremsscheibe (1) eines Schienenfahrzeuges mit einem fahrzeugseitigen Anschlusselement, wie einer Nabe (2), wobei die Wellenbremsscheibe (1) einen Reibring (3) und einen an dessen Innenumfang angeformten Flansch (4) aufweist, der am Anschlusselement befestigt ist, wobei beidseitig an den Flansch (4) und das Anschlusselement jeweils eine Vielzahl, von über den Umfang verteilten, aus Blech geformten Laschen (5) angeschlossen sind, **dadurch gekennzeichnet, dass** die Laschen (5) S-förmig ausgebildet sind, mit zwei gegensinnig ausgerichteten Schenkeln (10, 11), von denen einer am Flansch (4) und der andere an der Nabe (2) anliegt, wobei mindestens zwei benachbarte Schenkel (10) einstückig ausgebildet sind, während die dazu radial fortgesetzten, zueinander benachbarten Schenkel (11) getrennt voneinander sind.

2. Wellenbremsscheibe nach Anspruch 1, **dadurch gekennzeichnet, dass** die Laschen (5) mittels Verbindungselementen wie Schrauben (6), Nieten oder Stiften am Flansch (4) und an der Nabe (2) gehalten sind.

3. Wellenbremsscheibe nach Anspruch 1 oder 2, **dadurch gekennzeichnet, dass** die Anzahl der Verbindungselemente am Anschlusselement (2) zur Anzahl der Verbindungselemente am Flansch (4) unterschiedlich ist.

4. Wellenbremsscheibe nach einem der vorhergehenden Ansprüche, **dadurch gekennzeichnet, dass** alle umfänglich benachbarten Schenkel (10) einen geschlossenen Ring bilden, während die dazu radial fortgesetzten, umfänglich nebeneinander liegenden Schenkel (11) voneinander getrennt sind.

5. Wellenbremsscheibe nach einem der vorhergehenden Ansprüche, **dadurch gekennzeichnet, dass** jeder Schenkel (10, 11) eine Bohrung (12) zur Durchführung der Verbindungselemente aufweist.

6. Wellenbremsscheibe nach einem der vorhergehenden Ansprüche, **dadurch gekennzeichnet, dass** die Laschen (5) als Biege-Stanzteil ausgebildet sind.

7. Wellenbremsscheibe nach einem der vorhergehenden Ansprüche, **dadurch gekennzeichnet, dass** der Flansch (4) in einer umfänglichen Nut (13) der Nabe (2) axial gesichert einliegt.

8. Wellenbremsscheibe nach einem der vorhergehenden Ansprüche, **dadurch gekennzeichnet, dass** die Wellenbremsscheibe (1) und die Nabe (2) bajonettartig ineinander greifende Verschlussmittel aufweisen.

9. Wellenbremsscheibe nach einem der vorhergehenden Ansprüche, **dadurch gekennzeichnet, dass** Anzahl der Laschenschenkel (5) einer Primzahl entspricht.

10. Wellenbremsscheibe nach einem der vorhergehenden Ansprüche, **dadurch gekennzeichnet, dass** die Laschen (5) so orientiert sind, dass sie mit der Fläche ihres maximalen Flächenträgheitsmoments die bremsbedingte Umfangskraft vom Reibring (3) auf die Nabe (2) übertragen.

## Claims

1. Axle-mounted brake disk (1) in a rail vehicle, having a connecting element on the coach side, such as a hub (2), wherein the axle-mounted brake disk (1) has a friction ring (3) and a flange (4), which is formed on the inner circumference of said friction ring and is fastened to the connecting element, wherein a multiplicity of tabs (5) formed from metal sheet distributed around the circumference are connected on both sides to the flange (4) and the connecting element, **characterized in that** the tabs (5) are of S shaped design, with two limbs (10, 11) aligned in opposite directions, one of which rests on the flange (4) and the other on the hub (2), wherein at least two adjacent limbs (10) are formed in one piece, while the mutually adjacent limbs (11) which form a radial continuation thereof are separate from one another.

2. Axle-mounted break disk according to Claim 1, **characterized in that** the tabs (5) are held on the flange (4) and on the hub (2) by means of connection elements, such as screws (6), rivets or pins.

3. Axle-mounted brake disk according to Claim 1 or 2, **characterized in that** the number of connection elements on the connecting element (2) is different from the number of connection elements on the flange (4).

4. Axle-mounted brake disk according to one of the preceding claims, **characterized in that** all circumferentially adjacent limbs (10) form a closed ring, while the circumferentially adjacent limbs (11) which form a radial continuation thereof are separate from one another.

5. Axle-mounted brake disk according to one of the preceding claims, **characterized in that** each limb (10, 11) has a hole (12) for passing through the connection elements.

6. Axle-mounted brake disk according to one of the preceding claims, **characterized in that** the tabs (5) are designed as bent stampings.

7. Axle-mounted brake disk according to one of the preceding claims, **characterized in that** the flange (4) rests in an axially secured manner in a circumferential groove (13) in the hub (2).

8. Axle-mounted brake disk according to one of the preceding claims, **characterized in that** the axle-mounted brake disk (1) and the hub (2) have locking means which interengage bayonet-fashion.

9. Axle-mounted brake disk according to one of the preceding claims, **characterized in that** the number of tab limbs (5) corresponds to a prime number.

10. Axle-mounted brake disk according to one of the preceding claims, **characterized in that** the tabs (5) are oriented in such a way that they transmit the circumferential force induced by braking from the friction ring (3) to the hub (2) with the area of their maximum second moment of area.

## Revendications

1. Disque (1) de frein d'essieu, d'un véhicule ferroviaire, comprenant un élément de raccordement, comme un moyeu (4), du côté du véhicule, le disque (1) de frein d'essieu ayant un anneau (3) de friction et une bride (4) venue de matière sur son pourtour intérieur et fixée à l'élément de raccordement, dans lequel de part et d'autre, sur la bride (4) et sur l'élément de raccordement, sont raccordées respectivement une pluralité d'éclisses (5) en tôle réparties sur le pourtour, **caractérisé en ce que** les éclisses (5) sont constituées en forme de S, en ayant deux branches (10, 11) dirigées en sens contraire, dont l'une s'applique à la bride (4) et l'autre au moyeu (2), au moins deux branches (10) voisines étant constituées d'une seule pièce, tandis que les branches (11), voisines l'une de l'autre et qui les continuent radialement, sont séparées l'une de l'autre.

2. Disque de frein d'essieu suivant la revendication 1, **caractérisé en ce que** les éclisses (5) sont retenues sur la bride (4) et sur le moyeu (2), au moyen d'éléments d'assemblage, comme des vis (6), des rivets ou des chevilles.

3. Disque de frein d'essieu suivant la revendication 1 ou 2, **caractérisé en ce que** le nombre d'éléments d'assemblage de l'élément (2) de raccordement est différent du nombre d'éléments d'assemblage de la bride (4).

4. Disque de frein d'essieu suivant l'une des revendications précédentes, **caractérisé en ce que** toutes les branches (10), voisines sur le pourtour, forment un anneau fermé, tandis que les branches (11), se trouvant l'une à côté de l'autre périphériquement et qui les prolongent radialement, sont séparées les unes des autres.

5. Disque de frein d'essieu suivant l'une des revendications précédentes, **caractérisé en ce que** chaque branche (10, 11) a un trou (12) de passage des éléments d'assemblage.

6. Disque de frein d'essieu suivant l'une des revendications précédentes, **caractérisé en ce que** les éclisses (5) sont constituées sous la forme de pièce pliée-découpée.

7. Disque de frein d'essieu suivant l'une des revendications précédentes, **caractérisé en ce que** la bride (4) est insérée en étant fixée axialement dans une rainure (13) périphérique.

8. Disque de frein d'essieu suivant l'une des revendications précédentes, **caractérisé en ce que** le disque (1) de frein d'essieu et le moyeu (2) ont des moyens de fermeture s'interpénétrant de type à baïonnette.

9. Disque de frein d'essieu suivant l'une des revendications précédentes, **caractérisé en ce que** le nombre des branches (5) d'éclisse correspond à un nombre premier.

10. Disque de frein d'essieu suivant l'une des revendications précédentes, **caractérisé en ce que** les éclisses (5) sont orientées, de manière à transmettre, de l'anneau (3) de friction au moyeu (2), par la surface de moment d'inertie maximum, la force périphérique due au frein.
